**Europäisches Patentamt**

**European Patent Office**

**Office européen des brevets**

(19)

(11) Numéro de publication: **0 018 910**
**A1**

(12)

# DEMANDE DE BREVET EUROPEEN

(21) Numéro de dépôt: **80400590.8**

(22) Date de dépôt: **29.04.80**

(51) Int. Cl.³: **H 04 Q 11/04**

(30) Priorité: **08.05.79 FR 7911593**

(43) Date de publication de la demande:
**12.11.80  Bulletin  80/23**

(84) Etats Contractants Désignés:
**AT BE CH DE FR GB IT LI LU NL SE**

(71) Demandeur: **S.A. dite: COMPAGNIE INDUSTRIELLE DES TELECOMMUNICATIONS CIT-ALCATEL**
**12, rue de la Baume**
**F-75008 Paris(FR)**

(72) Inventeur: **Deglin, René**
**3, Allée du Roussillon**
**F-78140 Velizy Villacoublay(FR)**

(74) Mandataire: **Weinmiller, Jürgen et al,**
**Zeppelinstrasse 63**
**D-8000 München 80(DE)**

(54) **Système de raccordement de tables d'opératrices à un central à réseau de connexion numérique.**

(57) Système de raccordement de tables d'opératrices à un autocommutateur à réseau de connexion numérique commandé par au moins un calculateur central, l'autocommutateur comportant des unités périphériques de réception et d'émission et de signalisation des circuits et des lignes raccordés au réseau de connexion.

Des tables d'opératrices (T1) comportent un combiné (C) relié à une liaison basse fréquence (bf) et un pupitre (P) muni de moyens d'émission et de réception de données et relié à un canal numérique (cn) et le système comporte : au moins une unité de raccordement (UR1) reliée d'une part à un groupe de tables d'opératrices (GT1) par lesdites liaisons basse fréquence (bf) et lesdits canaux numériques (cn) de chacune des tables du groupe, et d'autre part au réseau de connexion (RCX) par une liaison à multiplexage temporel (MIC-T) et au moins une unité périphérique (UPT) pilotée par le calculateur central, affectée aux échanges de données entre les tables d'opératrices et ledit calculateur et raccordée au réseau de connexion par une liaison à multiplexage temporel (MIC-U).

Application notamment aux télécommunications.

./...

EP 0 018 910 A1

FIG.2

0018910

- 1 -

## Système de raccordement de tables d'opératrices à un central à réseau de connexion numérique

L'invention concerne un système de raccordement de tables d'opératrices à un central téléphonique à réseau de connexion numérique. Elle est applicable dans les industries de télécommunications.

On connait divers systèmes de raccordement de tables d'opératrices notamment à des centraux de type temporel. Un système de ce type est décrit notamment dans la revue "Commutation et Electronique" n° 55 de novembre 1976 pages 41 à 56, dans un article intitulé "Application privée et centrex du système E10 : l'autocommutateur citedis". Cet article décrit un système de type centrex, c'est-à-dire présentant les fonctions d'un central public et d'un central privé. Les tables d'opératrices sont raccordées à l'unité de raccordement d'abonnés par une liaison basse fréquence raccordée comme une ligne d'abonnés normale, et par deux liaisons supplémentaires assurant chacune la transmission de la signalisation dans un sens entre la table d'opératrice et le central.

Un autre système de ce type concernant le raccordement d'un poste d'opératrices à un central privé est décrit dans le brevet français n° 2.250. 250 de la demanderesse. Le poste d'opératrices est raccordé à un concentrateur par trois liaisons : une liaison basse fréquence pour le raccordement du casque et du combiné, et deux lignes multiplex affectées chacune à la transmission d'un sens de signalisation entre le poste d'opératrices et le concentrateur.

Dans ces système, le nombre de liaisons de chaque table d'opératrices au système est relativement faible, mais le nombre total de liaisons effectuées lorsque l'on a un grand nombre d'opératrices à relier reste élevé. D'autre part les tables d'opératrices ne sont pas gérées par des organes spécifiques, et le nombre de fonctions que peuvent réaliser les tables est limité.

Le but de l'invention est de réaliser un système de raccordement de tables d'opératrices pour un autocommutateur à réseau de connexion numérique commandé par des calculateurs centraux, comportant des moyens de gestion des opératrices permettant le raccordement d'un grand nombre de tables, et adaptable sans modification à des réseaux et à des cas d'exploitation divers.

L'invention a pour objet un système de raccordement de tables d'opératrices à un autocommutateur à réseau de connexion numérique commandé par au moins un calculateur central, l'autocommutateur comportant des unités périphériques de réception et d'émission de la signalisation des circuits et des lignes raccordées au réseau de connexion, caractérisé par le fait que des tables d'opératrices comportent un combiné relié à une liaison basse fréquence et un pupitre muni de moyens d'émission et de réception de données et relié à un canal numérique, et que le système comporte :

- au moins une unité de raccordement reliée d'une part à un groupe de tables d'opératrices par lesdites liaisons basse fréquence et lesdits canaux numériques de chacune des tables du groupe, et d'autre part au réseau de connexion par une liaison à multiplexage temporel (MIC-T) et

- au moins une unité périphérique pilotée par le calculateur central affectée aux échanges de données entre les tables d'opératrices et ledit calculateur et raccordée au réseau de connexion par une liaison à multiplexage temporel (MIC-U).

La description d'un mode de réalisation de l'invention donnée à titre d'exemple permet de bien en comprendre les caractéristiques. Cette description est illustrée par les figures suivantes :

- la figure 1 représente un diagramme d'un central téléphonique auquel s'applique l'exemple décrit,

- la figure 2 est un diagramme général du système suivant l'invention,

- la figure 3 montre une unité de raccordement et les tables d'opératri qui lui sont rattachées,

- la figure 4 montre les liaisons d'échanges de messages et de données dans une unité de raccordement,

- la figure 5 est un diagramme des échanges de messages entre émetteur-récepteurs asynchrones et unités logiques des unités de raccordements de tables d'opératrices,

- la figure 6 montre un mode de réalisation d'une unité périphérique de signalisation,

- la figure 7 montre un exemple d'implantation d'un système suivant l'invention.

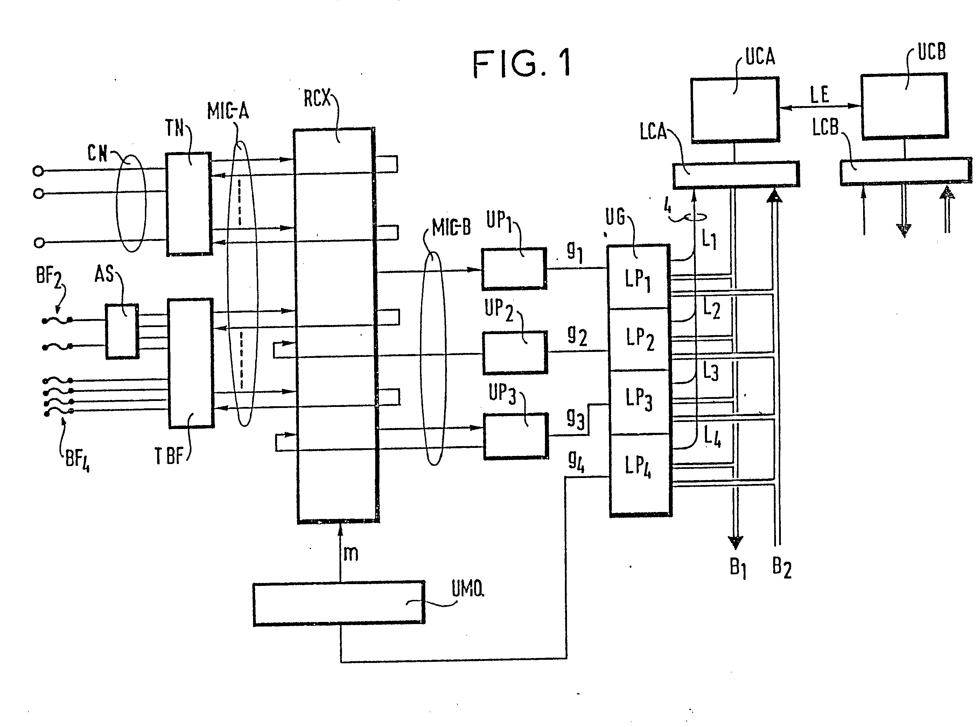

Le mode de réalisation décrit concerne le raccordement de tables d'opératrices à un autocommutateur de transit de type temporel. Un autocommutateur de ce type est décrit dans le brevet français n° 79 05971 du 8.3.79 de la demanderesse et est représenté à la figure 1. Il comporte un calculateur de commande qui est doublé (UCA, UCB) pour des raisons de sécurité. Les deux calculateurs UCA, UCB sont reliés par une liaison LE et travaillent par exemple en partage de charge. Les circuits raccordés au central téléphonique peuvent être de type numérique CN ou basse fréquence à deux fils BF2 ou à quatre fils BF4. Des liaisons de type MIC raccordées à un réseau de connexion RCX sont des liaisons à multiplexage temporel MIC à la norme européenne (liaisons utilisant la modulation par impulsion et codage désignée sous le nom de MIC). Pour mémoire, il s'agit de multiplex à 32 voies échantillonnées à la fréquence de 8kHz, chaque voie étant codée sur 8 éléments binaires. Les trames sont organisées en multitrames de 16 trames. La signalisation est portée par les voies numéro 16 des trames, la trame de numéro i portant la signalisation des voies i et i+16 codées chacune sur 4 des éléments binaires de la voie. Un signal de verrouillage de trame est porté par la voie 0 des trames paires, un signal de verrouillage de multitrames est porté par la voie 16 de la trame 0. La signalisation peut également être portée par des liaisons MIC indépendantes appelées canal sémaphore. Les liaisons MIC d'accès des circuits au réseau de connexion RCX sont appelées MIC-A sur la figure 1. Les circuits numériques CN sont reliés à des liaisons MIC-A par un terminal numérique TN effectuant la remise en forme des signaux. Les circuits basse fréquence 4 fils BF4 sont reliés à un terminal TBF qui effectue pour les circuits entrants un filtrage et un échantillonnage des signaux basse fréquence, suivi d'un codage numérique. Le circuit TBF effectue également le codage numérique de la signalisation et son injection dans les voies numéro 16 des trames numériques. Pour les circuits sortants, le terminal TBF effectue les fonctions inverses. Les circuits basse fréquence à 2 fils BF2 sont reliés au terminal TBF par l'intermédiaire d'un adaptateur de signalisation AS qui effectue une conversion 2 fils 4 fils. Les unités périphériques comportent des unités de signalisation UP1 à UP3, et une unité de marquage UMQ. L'unité de marquage est reliée au réseau de connexion par une liaison de commande m. Les unités

0018910

périphériques UP1 à UP3 sont reliées au réseau de connexion par des liaisons MIC appelées MIC-B. Les unités UP1 comporteront par exemple des émetteurs et des récepteurs de numérotation décimale. Les unités UP2 comporteront par exemple des émetteurs et des récepteurs de numérotation multifréquences. Les unités UP3 pourront être des unités de traitement de la signalisation par canal sémaphore. Les calculateurs UCA, UCB contrôlent toutes les opérations d'exploitation, de maintenance, et la commande de l'unité de signalisation et du réseau de connexion.

L'accès au calculateur est effectué par des logiques de couplage LCA, LCB qui sont des logiques programmées permettant la gestion d'unités périphériques. La gestion des messages échangés avec le calculateur au niveau des unités périphériques est faite par une unité de gestion UG comportant par exemple 4 unités logiques programmées LP1 à LP4 affectées aux unités UP1 à UP3 et UMQ. Les logiques LP1 à LP4 peuvent être de même type et comporter des programmes spécifiques. Les liaisons g1 à g4 entre les unités périphériques et les logiques LP1 à LP4 comportent une liaison pour chaque organe de chaque type, par exemple pour les organes de l'unité UP1, une liaison pour chaque récepteur décimal et une liaison pour chaque émetteur. Les liaisons entre les logiques LP1 à LP4 et les logiques de couplage LCA, LCB comportent par exemple des liaisons individuelles de commande L1 à L4 et des bus B1 et B2 pour l'échange des messages entrants et sortants.

Les connexions effectuées entre les liaisons MIC-A et les liaisons MIC-B pour l'émission ou la réception de la signalisation peuvent être permanentes ou à la demande. Par exemple pour la signalisation décimale on pourrait effectuer des liaisons permanentes, une liaison MIC B pouvant supporter la signalisation sur 31 voies connectées en permanence aux voies numéro 16 de 31 liaisons MIC-A c'est-à-dire la signalisation de 930 circuits téléphoniques.

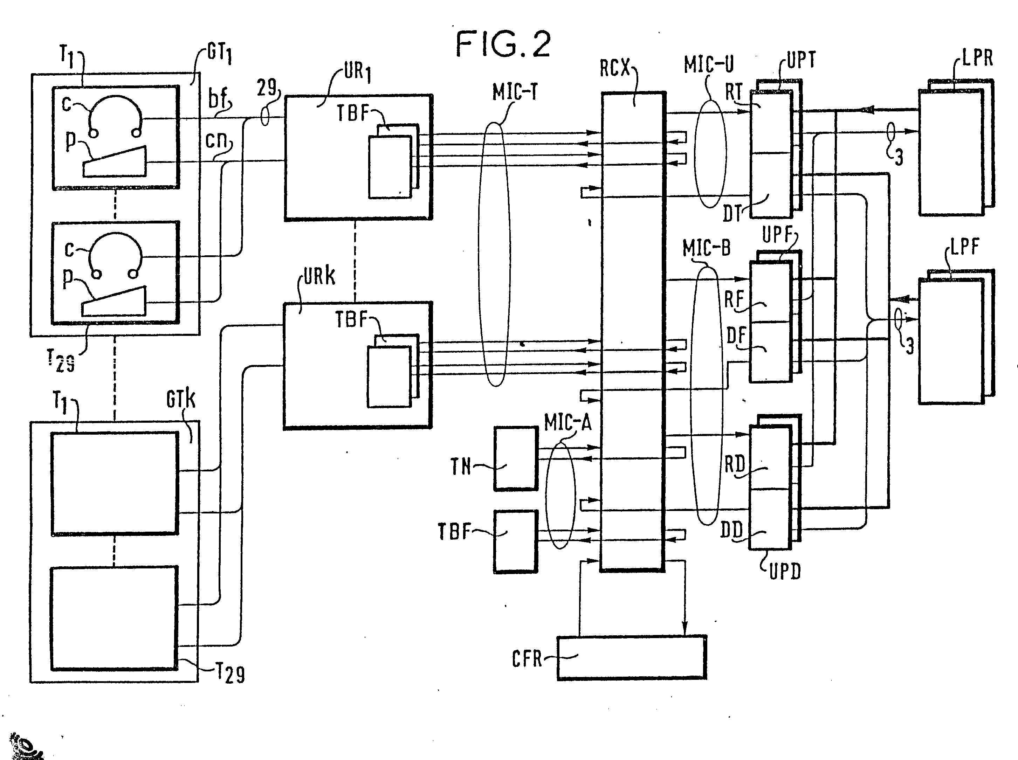

Un mode de réalistaion de l'invention appliqué à un central du type précédent est représenté sur la figure 2 et reprend les mêmes éléments avec les mêmes références que la figure 1.

Les tables d'opératrices sont organisées en groupes GT1 à GTk pouvant comporter chacun jusqu'à 29 tables T1 à T29. Chaque groupe de tables est relié à l'autocommutateur par une unité de raccordement (UR1 à URk). Une unité de raccordement est reliée à chaque table du groupe d'une manière qui sera détaillée plus loin par une liaison basse fréquence reliée au casque C de l'opératrice, et par deux liaisons multiplex d'échanges de données dans les deux sens reliées au pupitre P de l'opératrice.

Chaque unité de raccordement est reliée au réseau de connexion RCX de l'autocommutateur par un terminal TBF analogue à ceux qui reçoivent les circuits basse fréquence BF4. Ce terminal est doublé pour des raisons de sécurité, pour qu'une panne à ce niveau ne risque pas de mettre hors service 29 tables à la fois. Ce terminal pourrait être par exemple le terminal TNE1 normalisé par le CEPT (Conférence Européenne pour les Télécommunications).

Ce terminal peut recevoir des voies basse fréquence, et également des canaux numériques organisés en octets. Il est relié au réseau de connexion par une liaison MIC que l'on dénommera par la suite MIC T.

La capacité indiquée pour le groupe de tables provient de la structure choisie pour la trame de la liaison MIC-T et de l'utilisation des 32 voies temporelles pour la transmission des voies de paroles et de données. Dans cet exemple les données sont émises par les tables en code ASCII à une fréquence de 200 bauds. La liaison MIC-T est organisée en multitrames de 32 trames. Les 32 canaux d'une trame sont utilisés de la manière suivante :

- un canal de synchronisation de trames (canal 0),
- un canal de données affecté à l'une des tables (canal 6),
- un canal de signalisation (canal 16),
- les 29 autres canaux affectés aux 29 voies basse fréquence.

L'affectation des 32 trames d'une multitrame est représentée au tableau 1.

Tableau 1 - Affectation des trames (canal 6)

| N° de la trame | Affectation |
|---|---|
| 0 | Synchronisation multitrame (code de verrouillage) |
| 1 à 5 | Données des tables 1 à 5 |
| 6 | Inutilisé (code fixe) |
| 7 à 15 | Données des tables 6 à 14 |
| 16 | Information de gestion du MIC-T |
| 17 à 31 | Données des tables 15 à 29 |

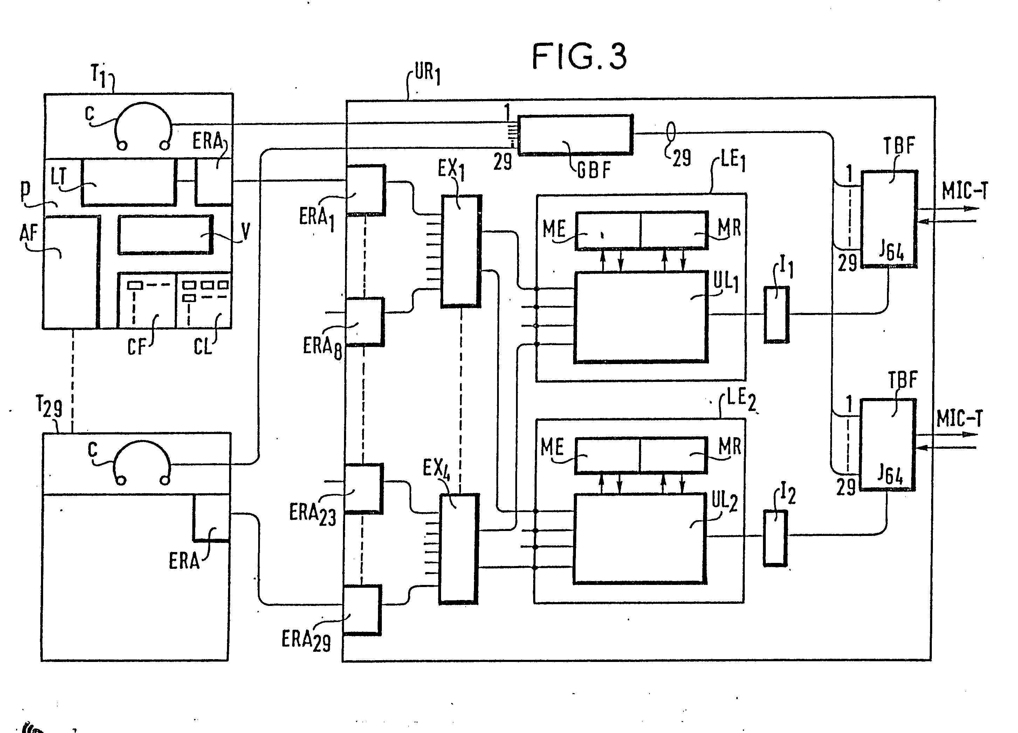

Le terminal TBF comporte une jonction normalisée à 64 Kbit/s J64 qui permet d'injecter des données organisées en octets dans un canal de la liaison MIC-T. Cette jonction J64 représentée à la figure 3 permet à l'unité de raccordement d'injecter les données des tables d'opératrices dans le canal 6 de la liaison MIC-T.

Le réseau de connexion RCX permet de relier d'une part les canaux numériques de la liaison MIC-T affectés aux voies basse fréquence aux canaux numériques MIC-A desdits circuits et lignes et à des circuits de conférence CFR et d'autre part de relier lesdits canaux numériques de la liaison MIC-T affectés aux données des tables d'opératrices à des canaux numériques d'au moins une liaison multiplex temporelle MIC-U raccordée à ladite unité périphérique UPT.

Le réseau de connexion RCX relie les canaux 6 de tous les MIC-T à une unité périphérique des calculateurs centraux analogues aux unités périphériques de la figure 1. Dans cette application les unités périphériques sont organisées en deux parties : un émetteur et un récepteur.

On aura ainsi par exemple (figure 2) une unité périphérique de signalisation décimale UPD comportant un récepteur RD et un distributeur DD, une unité périphérique multifréquence UPF comportant un récepteur RF et un distributeur DF, et une unité périphérique UPT affectée aux tables d'opératrices comportant un récepteur RT et un distributeur DT. Cette organisation permet d'affecter les logiques

- 7 -

périphériques de l'unité de gestion, soit à la réception, soit à l'émission. On aura ainsi une logique périphérique de réception LPR connectée à tous les récepteurs et une logique périphérique d'émission LME connectée aux distributeurs DT, DF, DD. La gestion par les logiques périphériques et les unités périphériques de messages échangés entre les pupitres des tables d'opératrices et les calculateurs centraux sera décrite en détails ci-après.

Le pupitre (figure 3) comporte des claviers CL, CF, des moyens d'affichage AF et éventuellement un écran de visualisation V. Les moyens d'affichage AF peuvent comporter des lampes de signalisation, et des afficheurs numériques ou alphanumériques. Les claviers peuvent comporter un clavier de numérotation CL et un clavier de fonctions CF. Ces moyens sont gérés par une logique de tables LT.

Les casques des 29 tables gérés par une unité de raccordement UR1 sont reliés à un groupe de jonctions basse fréquence GBF de cette unité. Les 29 sorties du groupe GBF sont reliées chacune en parallèle sur l'une des entrées de chacun des deux terminaux TBF affectée à l'unité de raccordement.

La liaison de données entre le pupitre et l'unité de raccordement est par exemple une liaison série en mode asynchrone asservi géré suivant l'avis V 24 du CCITT. Dans cet exemple on utilise à chaque extrêmité de la liaison un émetteur-récepteur asynchrone (ERA, ERA1) qui peut être par exemple un boîtier programmable de circuits intégrés de la série 8251. On peut utiliser notamment le boîtier SAB 8251 fabriqué par la firme Siemens.

On utilisera un tel boîtier par exemple pour une transmission asynchrone à 200 bauds, avec des informations en code ASCII, chaque message de données comportant un start, 7 moments codés, un bit de parité et deux stops.

Dans l'unité de raccordement UR1, les boîtiers ERA1 à ERA29 sont raccordés à 4 explorateurs EX1 à EX4, capables de gérer chacun un maximum de 8 boîtiers. Les échanges de messages sont traités par une logique d'échanges doublée pour des raisons de sécurité (LE1, LE2), chacune des logiques étant affectée à l'un des terminaux TBF. Chaque explorateur est relié aux deux logiques d'échanges, et la sortie de chaque logique est reliée à travers un interface I1 à la jonction J64 du terminal TBF permettant d'injecter des données dans le canal 6 de la liaison MIC-T.

Une logiques d'échanges telle que LE1 comporte une unité logique UL1, une mémoire d'émission ME et une mémoire de réception MR, chacune de ces mémoires pouvant stocker le contenu des voies 6 d'une multitrame.

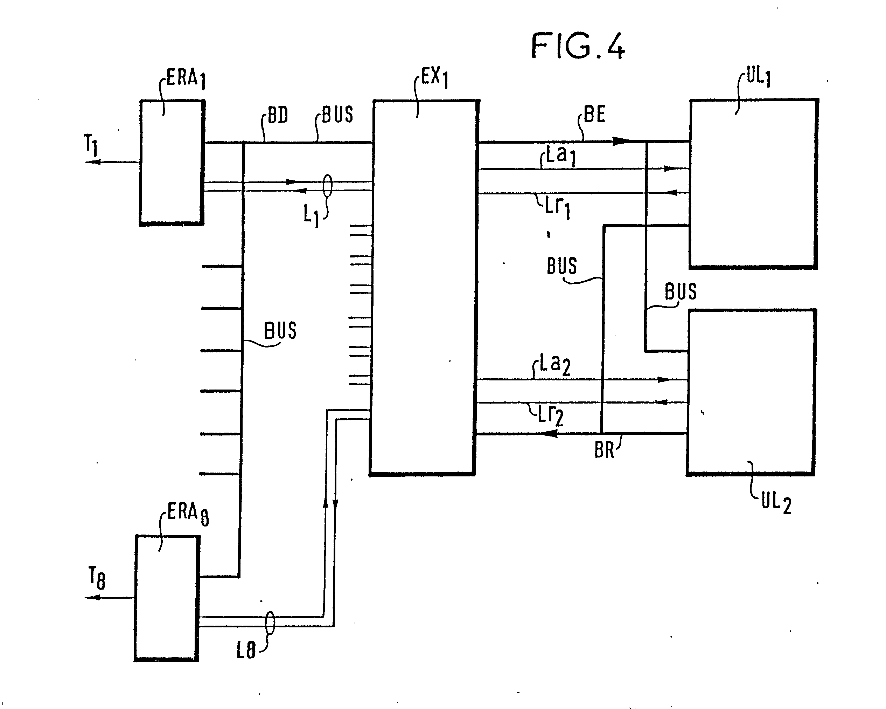

Les liaisons entre les boîtiers émetteurs-récepteurs asynchrones ERA1 à ERA8 et l'unité d'échanges EX1 (figure 4) comportent un bus commun de données BD et des liaisons individuelles d'appels-réponses L1 à L8. Les liaisons entre explorateur EX1 et unité logique UL1 et UL2 comportent un bus d'émission BE et un bus de réception BR reliés en parallèles sur les deux unités logiques, les liaisons d'appels La1 et La2, et des liaisons de réponses Lr1 et Lr2.

Les explorateurs EX1 à EX4 sont réalisés en logiques câblées. Les unités logiques UL1, UL2 peuvent être réalisées avec des microprocesseurs par exemple du type 8080 fabriqué par la firme Intel. Les unités périphériques sont également réalisées en logiques câblées. Un exemple de réalisation de ces logiques sera décrit plus loin. Les logiques programmées LPE et LPR sont des logiques de gestion d'échanges de messages par exemple du type décrit dans le brevet français de la demanderesse n° 79 11 322 . Fonctionnement des unités de raccordement

1/ Echanges de messages entre tables d'opératrices, unité de raccordement et terminal numérique.

A la réception d'un caractère, le boîtier ERA stocke celui-ci dans un dans un registre de réception, il positionne un drapeau indiquant que ce registre est plein. Le caractère doit être lu avant l'arrivée du caractère suivant. En émission, le boîtier possède un registre d'émission, et il signale la disponibilité en indiquant par un drapeau que le registre d'émission est vide.
Messages provenant des tables d'opératrices en direction du central.

Chacun des explorateurs EX1 à EX4 surveille cycliquement les drapeaux de réception de chacun des boîtiers URA qui sont affectés à cet explorateur. L'explorateur émet les messages simultanément vers les deux logiques LE1 et LE2, et le message sera aiguillé vers les deux terminaux TBF. Cependant un seul des MIC-T sera aiguillé par le réseau de connexion vers l'unité périphérique, le second ensemble étant utilisé en secours en cas de panne du premier.

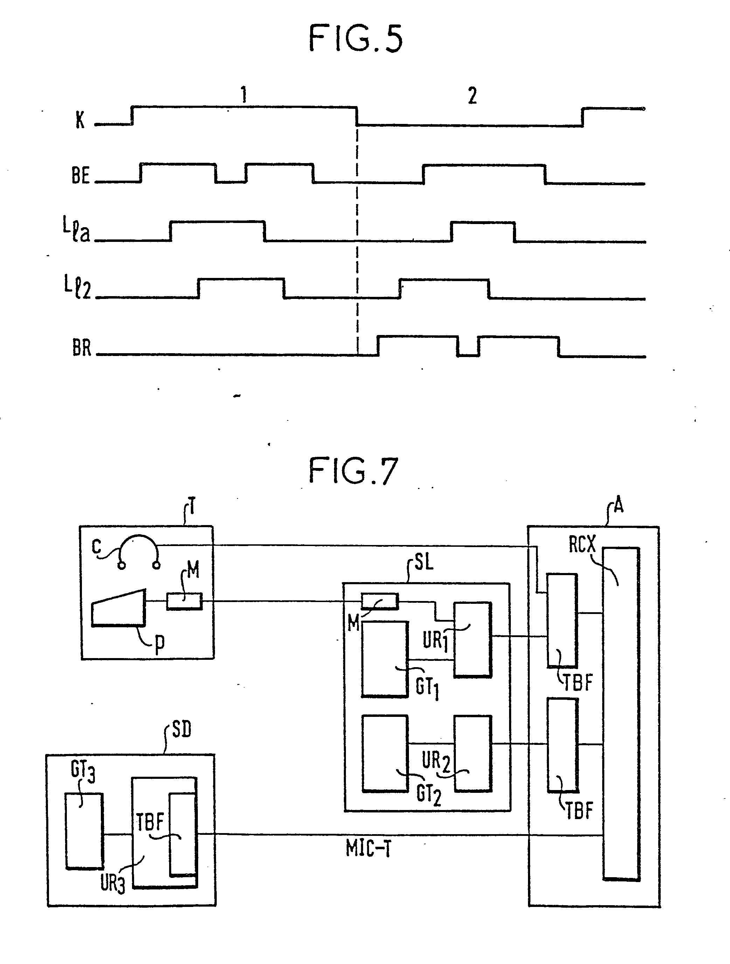

Les échanges de messages entre explorateur et unité logique UL1, UL2 sont effectués en mode asservi. Un intervalle de temps est affecté à chacune des unités logiques et pour chacun des sens de transmission. Ce temps est déterminé par une came. On a représenté à la figure 5 la came K affectée à l'unité UL1. La partie 1 de cette came permettant des échanges sur le bus BE et la partie 2 sur le bus BR.

Lorsque l'explorateur EX1 détecte le drapeau de l'un des boîtiers ERA, il présente sur le bus BE l'adresse de ce boîtier. Après une temporisation de stabilisation du bus BE il appelle les logiques UL1 et UL2 sur les fils La1 et La2 (lignes La à la figure 5). Après prise en charge de ces informations, la logique UL1 émet un signal d'acquittement sur le fil Lr1, et l'explorateur EX1 supprime l'adresse sur le bus BE et émet à la place des informations reçues sur le bus BD. Après stabilisation, la ligne La revient au repos et la logique UL1 supprime le signal sur le fil Lr1. L'explorateur supprime alors les données sur le bus BE.

Emission de signaux des logiques UL1 vers les postes d'opératrices.

Dans la partie 2 de la came K la logique UL1 est autorisée à émettre un caractère à destination d'un des boîtiers ERA. Les boîtiers ERA possèdent un tampon de ligne contenant en dehors des périodes de transmission de données un mot d'état qui indique l'état des registres d'émission et de réception, si le terminal est prêt ou non à recevoir un caractère, et les erreurs éventuelles de rythme de format ou de parité. Avant de transmettre une donnée, la logique UL1 demande d'abord ce mot d'état. Pour cela elle affiche sur le bus BR l'adresse du boîtier ERA destinataire. La procédure asservie représentée à la figure 5 en face de la partie 2 de la came est symétrique de la procédure utilisée dans le sens table d'opératrice vers unité logique.

Gestion des trames par l'unité logique UL1 -

A la réception d'un caractère venant de l'une des tables d'opératrices, l'unité logique UL1 range celui-ci dans la mémoire ME à l'adresse correspondant au numéro de la trame dans lequel le caractère doit être émis. L'adresse comportant 5 éléments binaires est élaborée par l'unité logique à partir de l'adresse du boîtier ERA (3 eb) et à partir du numéro de l'explorateur EX1 à EX4 (2 eb). La logique injecte également des codes de verrouillage de trames et de multitran

Les caractères ne sont pas répétés, c'est-à-dite que lorsqu'un caractère a été émis, la logique le remplace par le code repos qui est ensuite émis sur la liaison MIC-T à chaque multitrame c'est-à-dire toutes les 4 millesecondes.

En sens inverse, les données des canaux 6 des trames reçues par la jonction J64 sont rangées par la logique dans la mémoire MR au rythme de la multitrame c'est-à-dire à raison d'un octet toutes les 125 micro-secondes, et à l'adresse correspondant au numéro de la trame dans la multitrame. La logique compare les caractères reçus au code repos. Lorsque ce caractère est différent du code repos, la logique le transmet au boîtier ERA suivant la procédure déjà décri· Dans le cas où un caractère déjà reçu sur la même voie n'a pas été transmis, l'arrivée du caractère déclenche une alarme qui peut être transmise aux calculateurs centraux par les voies réservées à la gestion du canal (trame N° 16).

2 - Transmission de messages entre unité de raccordement et calculateu centraux

Les canaux de données (canaux N° 6) des MIC-T sont reliés par le réseau de connexion RCX à des liaisons MIC (MIC-U sur la figure 2) reliées chacune à une unité périphérique de table UPT. Les 31 canaux d'un MIC-U permettent de relier à une unité UPT 31 unités de raccordem c'est-à-dire 899 tables d'opératrices. Les unités UPT sont réalisées comme les unités de signalisation telles que UPF et UPD permettant l'émission et la réception de signalisation sur des canaux multiplex. Elles comportent des moyens de contrôle des codes de synchronisation des MIC, des mémoires de voies d'émission et de réception, des moyens de lecture et d'écriture des mémoires, et les moyens de contrôle des informations.

Le récepteur RT transmet au calculateur les changements d'état. Pour cela il analyse les caractères reçus sur le MIC et les range dans une mémoire de voie. L'émetteur DT possède également une mémoire de voie dans laquelle sont stockées toutes les informations d'une multitrame et des moyens d'émission des signaux de verrouillage de trames et de multitrames. L'émetteur et le récepteur possèdent également un interface de liaisons réciproquement avec les logiques LPE, LPR.

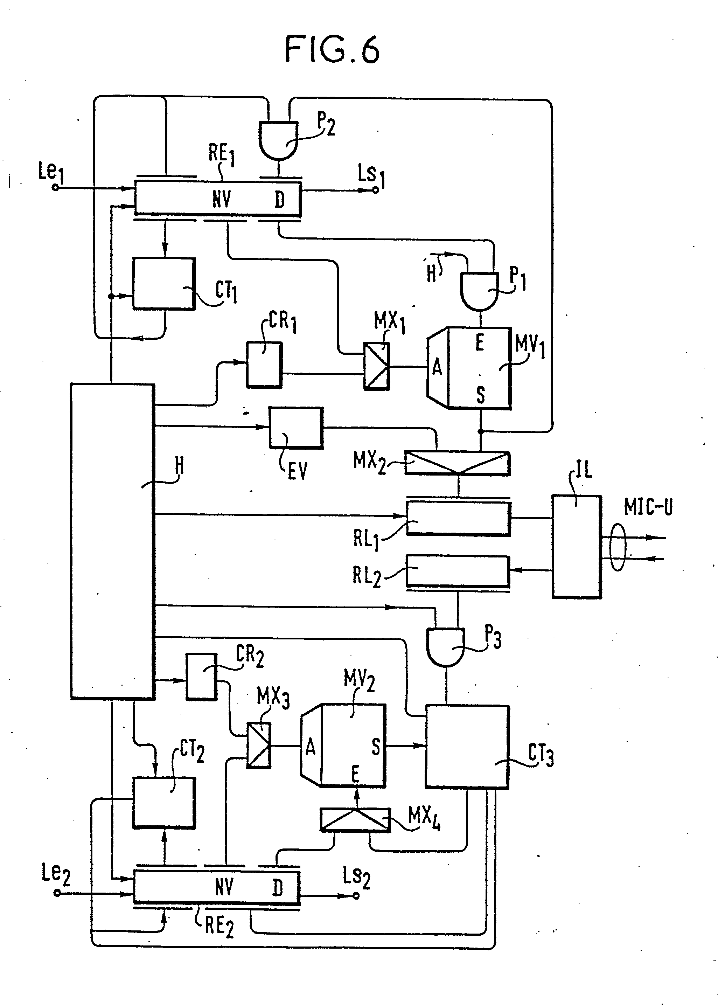

On va décrire à titre d'exemple une unité périphérique qui peut être utilisée aussi bien pour réaliser les unités UPT que UPD et UPS. La figure 6 représente l'émetteur et le récepteur, dont les opérations sont pilotées par une horloge commune H. Les interfaces de liaisons avec les logiques programmées, sont réalisées par des registres à décalage RE1 pour l'émetteur, RE2 pour le récepteur dans lesquels sont émis et reçus les messages des logiques programmées. Les liaisons communes représentées à la figure 2 entre les logiques programmées et les unités périphériques aboutissent aux entrées Le1, Le2 de ces registres et les liaisons individuelles vers les logiques programmées partent des sorties Ls1, Ls2 de ces registres.

Pour rendre plus claire la suite de la description de la figure 6, on va indiquer le contenu des messages échangés entre les logiques programmées et les unités périphériques. Les messages dans le sens logique programmée vers unité périphérique sont représentés au tableau 2a (messages aller) et les messages vers les logiques programmées au tableau 2b (messages retour).

Tableau 2a -

| P | NI | F | NV | D |
|---|---|---|---|---|
| PARITE | NUMERO D'IDENTIFICATION | FONCTION | NUMERO DE VOIE | DONNEE |

Tableau 2b -

| P | R | CP | PA | T | F | NV | D |
|---|---|---|---|---|---|---|---|
| PARITE | | | PARITE ALLER | TYPE | FONCTION | NUMERO DE VOIE | DONNEE |
| | | COMPARAISON | | | | | |
| RECONNAISSANCE | | | | | | | |

Les messages aller étant émis simultanément vers tous les périphériques comportent un numéro d'identification du destinataire.
Ils comportent également un numéro de voie temporelle (NV) du MIC
correspondant à la signalisation émise ou reçue, un certain nombre
de bits de données D, et un code de fonction F. En effet dans cet
exemple on utilise des interfaces standards pour tous les périphérique
et d'autre part les émetteurs et récepteurs peuvent réaliser des
fonctions autres que la simple émission et réception signalisation
correspondant aux communications, par exemple des opérations de tests.
Enfin le message aller comporte un code de parité.

Le message retour comporte les mêmes informations à l'exception
du numéro d'identification qui n'est plus nécessaire puisqu'il y
a une liaison par périphérique. A la place de ces numéros, le message
comporte un code de reconnaissance R indiquant que le périphérique
a reconnu que le message aller correspondant lui était destiné, un
code de contrôle de parité du massage aller PA, un résultat de comparaison CP pour le cas où le message aller demandé a une fonction de
comparaison, et un code de type indiquant la nature du périphérique
concerné, la procédure étant la même pour tous les types de périphériques.

Les registres RE1 et RE2 sont formés de registres à décalage
en série comportant chacun une partie des informations. De cette
manière les différentes informations d'un message peuvent être chargées
et déchargées séparément en parallèle.

L'émetteur possède un circuit de traitement CT1 traitant la
parité du message, le numéro d'identification et la fonction. Pour
cela ce circuit comprend un comparateur du numéro d'identification
avec le numéro propre au périphérique, un décodeur de fonctions,
et un circuit de contrôle de parité. La sortie du circuit CT1 est
reliée à une entrée parallèle du registre RE1 de manière à charger
les informations P, R, PA, CP, T du message retour. La partie donnée D
du message peut être transmise à l'entrée de la mémoire de voie MV1
à travers une porte ET P1 contrôlée par l'horloge H. Les données D
peuvent être chargées dans le registre RE1 à partir de la sortie
de la mémoire de voies, à travers une porte ET P2 contrôlée par le
circuit CT1. L'adressage de la mémoire pour les échanges de données avec le registre RE1 est réalisé à partir du numéro de voie NV à travers un multiplexeur MX1. Pour l'émission des données sur le MIC à partir de la mémoire MV1, celle-ci est adressée à travers le multiplexeur MX1 par un compteur CR1 piloté par l'horloge H rythmant la sortie des informations sur le MIC-U. Le MIC-U est relié à l'unité UPT par un interface de lignes IL assurant d'une manière classique la mise en forme des informations et le transcodage. Les liaisons entre l'unité UPT et cet interface sont assurées également par des registres à décalage RL1, RL2 affectés réciproquement à l'émetteur et au récepteur. Le mot mémoire adressé par le compteur CR1 est chargé en parallèle par le registre RL1 à travers un multiplexeur MX2. Le registre RL1 peut être également chargé à travers le multiplexeur MX2 par un circuit EV piloté par l'horloge H destiné à émettre les codes de verrouillage de trames et de multitrames. L'émission série des informations sur le MIC à partir du registre RL1 est également pilotée par l'horloge H.

Le récepteur comporte un interface avec les logiques programmées analogue à celui de l'émetteur : mémoire de voie MV2 adressée à travers un multiplexeur MX3, soit à partir du numéro de voie NV, soit à partir d'un compteur CR2 piloté par l'horloge H, circuit des traitements CT2 analogue au circuit CT1. Les données reçues sur le registre de lignes RL2 sont transmises à un circuit de traitement CT3 à travers une porte ET P3 contrôlée par l'horloge H. Le circuit CT3 est également relié à l'horloge H, aux entrées de chargement des informations NV et D du registre RE2, aux circuits CT2 et à l'entrée de la mémoire MV2 à travers un multiplexeur MX 4. L'autre entrée de ce multiplexeur est reliée à la sortie d'information D du registre RE2.

Fonctionnement de l'unité périphérique -

1 - Emission : les informations sur le MIC-U sont chargées en permanence à partir de la mémoire MV1 et du circuit EV à travers le registre RL1 sous le contrôle de l'horloge. La modification d'un mot mémoire est réalisée par un message du calculateur comportant la fonction inscription en mémoire. Tout message aller donne lieu à un accusé de réception par message retour.

2 - En réception : les informations en provenance du MIC sont chargées en permanence dans le registre RL2 et transmises au circuit CT3 sous le contrôle de l'horloge H. Le circuit CT3 comporte un circuit d'analyse qui permet de reconnaître les codes de verrouillage de trames et de multitrames, qui permet de contrôler le positionnement des trames. Les octets d'informations sont rangés dans la mémoire de voie MV2 à l'adresse correspondant au numéro de voie. En lecture, la mémoire de voie MV2 est adressée par le compteur CR2, et les informations sont comparées au code repos par le circuit CT3. Lorsqu'un octet est différent du code repos, un message est composé dans le registre RE2 à destination du calculateur. Les informations P, R, PA, CP, T et F sont fournies par le circuit CT2, et le numéro de voie est donné par le circuit CT3. Un message de prise en compte provenant du calculateu permet d'effacer l'information en mémoire.

Le système suivant l'invention permet de raccorder des tables d'opératrices ou des groupes de tables situés dans des locaux à diverses distances de l'autocommutateur. Une réalisation de ce type est représenté à la figure 7. L'autocommutateur est situé dans une salle A. Une salle d'opératrices située dans le même local ou dans un local contigü SL comporte deux groupes de tables GT1, GT2 et les unités de raccordement correspondantes. Les terminaux TBF sont situés dans ce cas dans des bâtis de l'autocommutateur avec les autres terminaux numériques ou basse fréquence. En utilisant les types de matériels décrits dans cet exemple, la distance du local SL à l'autocommutateur ne devra pas dépasser 1000 m. On a représenté également une salle distante SD comportant un groupe de tables GT3, cette salle SD pouvant être distante de plusieurs kilomètres de l'autocommutateur. Dans ce cas le terminal TBF reste dans l'unité de raccordement UR3 et est relié au réseau de connexion de l'autocommutateur par un MIC-T. Une autre solution peut être intéressante lorsque l'on a un petit nombre de tables distantes ne justifiant pas l'utilisation d'une unité de raccordements séparée. A la figure 7 la table distante T est rattachée à l'une des unités de raccordement de la salle SL. Le casque est relié au terminal TBF par une paire téléphonique, et la liaison entre le pupitre et l'unité de raccordement UR1 est faite par des modems M exploités à une vitesse de 200 à 300 bauds.

- 15 -

Bien entendu, l'invention n'est pas limitée au mode de réalisation décrit, en particulier les matériels et les normes d'exploitation cités ne l'ont été qu'à titre d'exemple ; elle est susceptible de nombreuses variantes suivant les applications envisagées et les moyens techniques équivalents utilisés.

REVENDICATIONS

1/ Système de raccordement de tables d'opératrices à un autocommutateur à réseau de connexion numérique commandé par au moins un calculateur central, l'autocommutateur comportant des unités périphériques de réception et d'émission et de signalisation des circuits et des lignes raccordés au réseau de connexion, caractérisé par le fait que des tables d'opératrices (T1) comportent un combiné (C) relié à une liaison basse fréquence (bf) et un pupitre (P) muni de moyens d'émission et de réception de données et relié à un canal numérique (cn) et que le système comporte :

- au moins une unité de raccordement (UR1) reliée d'une part à un groupe de tables d'opératrices (GT1) par lesdites liaisons basse fréquence (bf) et lesdits canaux numériques (cn) de chacune des tables du groupe, et d'autre part au réseau de connexion (RCX) par une liaison à multiplexage temporel (MIC-T) et

- au moins une unité périphérique (UPT) pilotée par le calculateur central (UCA), affectée aux échanges de données entre les tables d'opératrices et ledit calculateur et raccordée au réseau de connexion par une liaison à multiplexage temporel (MIC-U).

2/ Système de raccordement suivant la revendication 1, caractérisé par le fait que lesdites unités de raccordement (UR1) comportent des moyens d'émission et réception individuels raccordés aux canaux numériques vers chacune des tables (ERA1 à ERA29), un ensemble logique (LE1, LE2, EX1 à EX4) gérant les échanges de données numériques entre lesdits canaux numériques reliés aux tables d'opératrices et un canal numérique de regroupement, et un terminal d'extrêmité (TBF) assurant les transferts de données numériques et de courant basse fréquence entre d'une part les liaisons basse fréquence provenant des tables d'opératrices et ledit canal numérique de regroupement, et d'autre part ladite liaison à multiplexage temporel (MIC-T) relié au réseau de connexion de l'autocommutateur.

3/ Système de raccordement suivant la revendication 2, caractérisé par le fait qu'il comporte au moins un explorateur (EX1) réalisant les transferts de données entre les moyens d'émission réception des tables du groupe (ERA1 à ERA8) et au moins une logique d'échanges (LE1) qui effectue la mise en forme des données sur ledit canal de regroupement

4/ Système de raccordement suivant la revendication 3, caractérisé par le fait que la logique d'échanges (LE1) comporte une unité logique (UL1) associée à une mémoire divisée en deux parties : une mémoire d'émission (ME) dans laquelle sont écrites les données provenant des tables et qui est lue au rythme de sortie des données sur ledit canal numérique de regroupement et une mémoire de réception (MR) qui est écrite au rythme d'arrivée des données sur ledit canal numérique de regroupement et qui est lue au rythme d'envoi des données par l'unité de raccordement vers les tables d'opératrices.

5/ Système de raccordement suivant la revendication 1, caractérisé par le fait que ladite liaison à multiplexage temporel (MIC-T) est organisée en trames et multitrames, chaque trame comportant au moins un canal affecté à la liaison basse fréquence de chaque table d'opératrice d'un groupe, et un canal numérique affecté aux données d'une des tables d'opératrices, la multitrame comportant au moins autant de trames qu'il y a de tables dans un groupe, et le réseau de connexion (RCX) permettant de relier d'une part les canaux numériques de la liaison MIC (MIC-T) affectés aux voies basse fréquence aux canaux numériques (MIC-A) desdits circuits et lignes et à des circuits de conférence (CFR) et d'autre part de relier lesdits canaux numériques de la liaison MIC (MIC-T) affectés aux données des tables d'opératrices à des canaux numériques d'au moins une liaison multiplex temporelle (MIC-U) raccordée à ladite unité périphérique (UPT).

6/Système de raccordement suivant la revendication 1, dans lequel ladite unité périphérique (UPT) comporte un récepteur (RT) et un émetteur (DT) reliés à ladite liaison à multiplexage temporel (MIC-U) par un interface de lignes (IL), caractérisé par le fait que l'émetteur et le récepteur comportent des moyens d'échanges de messages avec le calculateur (RE1, CT1, RE2, CT2), une mémoire de voie (MV1, MV2) lue ou écrite à la fréquence des canaux de ladite liaison MIC (MIC-U), l'émetteur comportant en outre un circuit d'émission (EV) du code de verrouillage de la liaison MIC (MIC-U) et l'émetteur comportant un moyen de contrôle (CT3) de code de verrouillage.

7/ Système de raccordement suivant la revendication 1 permettant d'implanter des tables dans un local proche de l'autocommutateur et dans des locaux distants, caractérisé par le fait que les tables distantes peuvent être soit groupées dans des locaux comportant une unité de raccordement distante raccordée au réseau de connexion (RCX) de l'autocommutateur par une liaison MIC ( MIC-T), soit être raccordée séparément par des liaisons comportant des modems (M) à une unité de raccordement d'un groupe de tables situé dans un local proche de l'autocommutateur.

FIG. 1

FIG.2

# FIG.3

# FIG.4

0018910

# FIG.5

# FIG.7

# FIG.6

0018910

Office européen des brevets

**RAPPORT DE RECHERCHE EUROPEENNE**

Numéro de la demande

EP 80 40 0590

| Catégorie | Citation du document avec indication. en cas de besoin, des parties pertinentes | Revendication concernée |
|---|---|---|
| | FR - A - 2 011 050 (WESTERN ELEC-TRIC) <br><br> * Page 2, ligne 22 à page 9, ligne 24 * <br><br>-- | 1-4,6,7 |
| | FR - A - 2 376 578 (SOCIETE ANONYME DE TELECOMMUNICATIONS) <br><br> * Page 2, ligne 30 à page 3, ligne 27; figure 1 * <br><br>-- | 1,7 |
| | DE - A - 2 245 708 (TELEFONBAU UND NORMALZEIT) <br><br> * Page 5, lignes 3 à 14; figure 1 * <br><br>-- | 1 |
| | PROCEEDINGS OF THE NATIONAL ELEC-TRONICS CONFERENCE, 10-12 octobre 1977 <br> OAK BROOK ILLINOIS (US) <br> B. SJOSTRAND: "Axe 10 for digital toll switching applications", pages 256 à 260. <br><br> * Page 258, colonne de gauche, lignes 18 à 57; figure 4 * <br><br>-- | 1,7 |
| | COMMUTATION ET ELECTRONIQUE, no. 56, janvier 1977 <br> PARIS (FR) <br> P. DANAN et al.: "Architecture du systeme Telcom 200", pages 39 à 52. <br><br> * Page 49, colonne de droite, lignes 20 à 52 * <br><br>-- <br> ./.. | 1,7 |

**CLASSEMENT DE LA DEMANDE (Int. Cl ·)**

H 04 Q 11/04

**DOMAINES TECHNIQUES RECHERCHES (Int. Cl. 3)**

H 04 Q

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille. document correspondant

X Le présent rapport de recherche a été établi pour toutes les revendications

| Lieu de la recherche | Date d achevement de la recherche | Examinateur |
|---|---|---|
| La Haye | 07-07-1980 | YOULE |

Office européen
des brevets

**RAPPORT DE RECHERCHE EUROPEENNE**

Numéro de la demande

EP 80 40 059

-2-

| Catégorie | Citation du document avec indication, en cas de besoin, des parties pertinentes | Revendication concernée |
|---|---|---|
| | **DOCUMENTS CONSIDERES COMME PERTINENTS** | |
| | 1978 INTERNATIONAL ZURICH SEMINAR ON DIGITAL COMMUNICATIONS, 7-9 mars 1978, IEEE NEW YORK (US) R. BARTH et al.: "A digital PABX system with improved flexibility" pages B.5.1 à B.5.6. * Page B.5.4, colonne de droite, ligne 51 à page B.5.6, colonne de gauche, ligne 38; figures 4 et 5 * -- | 1 |
| A,D | COMMUTATION ET ELECTRONIQUE, no. 55, novembre 1976 PARIS (FR) J.B. JACOB et al.: "Application privée et Centrex du système E10: l'autocommutateur Citedis", pages 41 à 56. * Page 48, colonne de gauche, ligne 41 à colonne de droite, ligne 49 * -- | 1 |
| A,D | FR - A - 2 250 250 (SLE-CITEREL) * Revendications 1 à 6 * ---- | 1 |

CLASSEMENT DE LA DEMANDE (Int. Cl. 3)

DOMAINES TECHNIQUES RECHERCHES (Int. Cl. 3)

OEB Form 1503.2  06.78